Europäisches Patentamt

European Patent Office

Office européen des brevets

(11) Publication number: **0 103 480**
**B1**

(12) **EUROPEAN PATENT SPECIFICATION**

(45) Date of publication of patent specification: **11.01.89**

(51) Int. Cl.⁴: **B 27 G 13/10, B 23 C 5/24**

(21) Application number: **83305324.2**

(22) Date of filing: **12.09.83**

(54) Cutterblock blade anchorage.

(30) Priority: **11.09.82 GB 8226188**

(43) Date of publication of application:
**21.03.84 Bulletin 84/12**

(45) Publication of the grant of the patent:
**11.01.89 Bulletin 89/02**

(84) Designated Contracting States:
**CH DE FR GB IT LI NL SE**

(56) References cited:
**CH-A- 241 723**
**DE-A-2 226 245**
**DE-B-1 046 862**
**DE-C- 839 556**
**DE-C- 858 602**
**FR-A- 610 027**
**GB-A- 550 077**

(73) Proprietor: **WADKIN PUBLIC LIMITED COMPANY**
**Green Lane Works Green Lane Road**
**Leicester, LE5 4PF (GB)**

(72) Inventor: **Stocker, Mark Andrew**
**152 Coombe Rise**
**Oadby Leicestershire (GB)**

(74) Representative: **SERJEANTS**
**25 The Crescent King Street**
**Leicester, LE1 6RX (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to rotary cutterblocks for woodworking machines, and in particular to the anchorage of the blades in such cutterblocks.

Conventional rotary cutterblocks comprise a cylindrical cutterblock body having a number of inwardly divergent recesses in the cylindrical outer surface of the body, and a cutter blade retained in each of the recesses by a wedge member and one or more clamping screws. In one form of cutterblock the clamping screws are dog point grub screws screw threadedly engaging a chordal threaded bore in the cutterblock to bear against a front face of the wedge member so that the cutter blade is clamped between the rear face of the wedge member and a rear face of the recess in the cutterblock body. One major disadvantage in the use of such dog point screws is that they tend to fracture in the cutterblock body due to the reduced amount of material around the hexagonal shaped hole or screwdriver slot used for turning the screws. These screws, when they fail, are a major problem to extract from the cutterblock.

In another form of cutterblock the clamping screws are hexagonal headed screws screwthreadedly engaging the wedge member, with the hexagonal head of each screw projecting from the wedge member into the recess in the cutterblock body. Such screws are accessed and turned by means of a spanner inserted radially into the recess in the cutterblock body, between the front face of that recess and the wedge. One major disadvantage in such a design is that it imparts a necessary clearance between the front face of the recess and the wedge, which clearance generates substantial amounts of noise in use, particularly in high speed use, and interferes with good chip flow from the blade in use.

The disadvantages of both of the above designs are overcome by the invention which provides a rotary cutterblock for a woodworking machine, comprising a cylindrical cutterblock body having a number of inwardly divergent recesses in the cylindrical outer surface thereof and a cutter blade retained in each of the recesses by a wedge member and one or more clamping screws screw-threaded in the wedge member, characterised in that each wedge member substantially fills its recess and has its clamping screw or screws recessed therein so that a head of the or each screw lies close to the plane of the front face of the wedge member, and the cutterblock body is provided with a chordal passage for each clamping screw, aligned with the axis if the respective clamping screw for insertion of a key member to tighten or loosen the screw.

Because the wedge member of the cutterblock if the invention substantially fills its recess, it may be made of a suitable profile to achieve optimum chip flow. Also such filling of the recess reduces the noise of the cutterblock in operation.

The clamping screws of the cutterblock of the invention are headed screws (unlike the grub screws of the prior art) so that the additional material around the screwdriver slot or hexagonal shaped hole at the head of the screws provides a very considerable strengthening in an area of proved weakness. It is surprising that the cutter blocks of the invention are reliable in practice, as the chordal access passages for the clamping screws in effect remove a substantial part of the material of the cutterblock body in precisely the zone where there would otherwise have been engagement between the head of the clamping screw and the cutterblock body. This leaves the engagement of those two parts as being simply in an annular zone around the mouth of the chordal access passage, which surprisingly has been found more than adequate to provide a very safe and reliable blade anchorage.

DRAWINGS:

Figure 1 is a schematic cross section through a rotary cutterblock of the invention, with only one blade and blade mounting wedge being shown;

Figure 2 is a corresponding section through a part of one form of prior art cutterblock;

Figure 3 is a corresponding section through a part of another form of prior art cutterblock; and

Figure 4 is a corresponding section through another rotary cutter block if the invention.

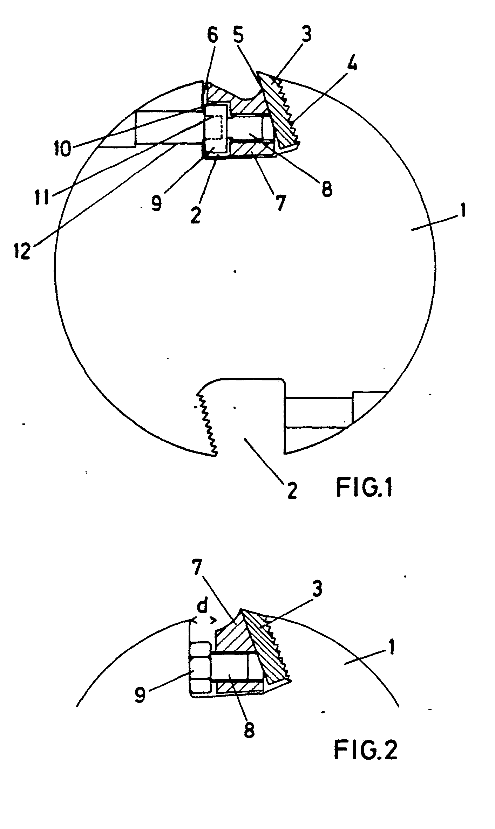

Referring first to Figure 1, the cutterblock comprises a cylindrical cutterblock body 1 having two diametrically opposed inwardly divergent recesses 2 formed therein.

In the upper of the two recesses 2 as illustrated there is shown in detail a blade and blade mounting. The blade 3 is shown as having a serrated back face 4, engaging mating serrations in the cutterblock body. Between the front face 5 of the blade 3 and the front face 6 of the recess 2 there is provided a wedge 7 and a clamping screw 8. The threaded shaft of the clamping screw 8 screw threadedly engages a bore in the wedge 7, and a head 9 of the screw is received in a cutaway portion 10 if the wedge 7.

In the head 9 of the screw 8 is formed a hexongal key recess 11, enabling the screw to be turned by an Allen key (not shown). To enable the key to be inserted in the recess 11, there is provided a chordal passage 12 extending through the body 1 in alignment with the axis of the screw 8.

In use, the screws 8 are screwed fully into the wedges 7, and the wedges inserted into the recesses 2 in the axial direction. Allen keys are then inserted through the passages 12 and used to withdraw successive screws 8 partially from the threaded bores in the wedges 7, until the outer annular portion of the head 9 if each screw 8 engages that portion of the front face 6 of the recess 2 immediately surrounding the passage 12. In this way the blade can be securely anchored in the cutterblock.

Figure 2 shows how, in a prior design, the head 9 of each clamping screw 8 was a hexongal head that was accessed radially through a gap between the wedge 7 and the body 1 of the cutterblock.

The spacing d between the wedge and the body did, however, produce undesirable noise during operation and interfered with good chip flow.

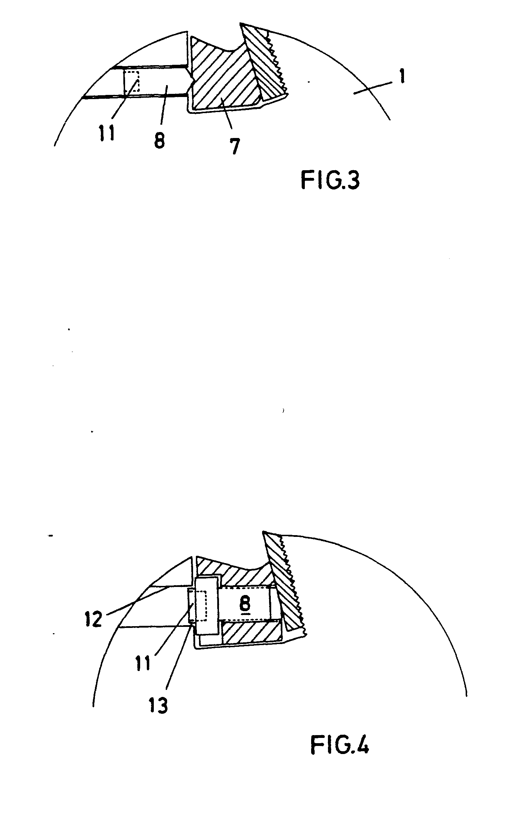

Figure 3 shows an alternative prior art construction, in which the wedge 7 was retained by a dog point grub screw 8 screw threaded into the body 1 of the cutterblock. The relative lack of material around the hexagonal recess 11 in the grub screw 8 resulted in frequent failure of such anchorages, such failures being avoided in the cutterblock of the invention.

Figure 4 shows another embodiment of the invention which is similar to that of Figure 1 except that the screw 8 has a head 9 which is shaped at 13 to extend partially into the chordal passage 12. This provides a more positive anchorage of the wedge 7, which may be desirable for some applications.

## Claims

1. A rotary cutterblock for a woodworking machine, comprising a cylindrical cutterblock body having a number if inwardly divergent recesses in the cylindrical outer surface thereof and a cutter blade retained in each of the recesses by a wedge member and one or more clamping screws screw-threaded in the wedge member, characterized in that each wedge member (7) substantially fills its recess (2) and has its clamping screw or screws (8) recessed therein so that a head (9) of the or each screw lies close to the plane of the front face if the wedge member, and the cutterblock body is provided with a chordal passage (12) for each clamping screw, aligned with the axis of the respective clamping screw for insertion of a key member to tighten or loosen the screw.

2. A rotary cutterblock according to claim 1, wherein the head (9) of the or each screw (8) is shaped (13) to extend partially into the chordal passage (12).

## Patentansprüche

1. Rundfräskopf für eine Holzbearbeitungsmaschine mit einem zylinderförmigen Fräskopfkörper, in dessen Außenfläche nach innen abzweigende, jeweils ein Fräsmesser enthaltende Aussparungen angeordnet sind, wobei jedes Fräsmesser durch ein Keilelement und eine oder mehrere, in das Keilelement eingeschraubte Spannschrauben verankert ist, dadurch gekennzeichnet, daß jedes Keilelement (7) seine Aussparung (2) weitgehend ausfüllt und seine Spannschraube(n) (8) so darin eingelassen ist (sind), daß ein Kopf (9) der bzw. jeder Schraube annähernd in der Ebene der vorderen Keilelementfläche liegt, und im Fräskopf für jede Spannschraube ein tangentialer Durchgang (12) vorgesehen ist, der mit der Achse der entsprechenden Spannschraube fluchtet und zur Einführung eines Schlüsselelementes zum Festziehern bzw. Lösen der Schraube dient.

2. Rundfräskopf gemäß Anspruch 1, dadurch gekennzeichnet daß der Kopf der bzw. jeder Schraube (8) so geformt (13) ist, daß er teilweise in den tangentialen Durchgang hineinragt (12).

## Revendications

1. Bloc rotatif de coupe destiné à une machine de travail sur bois comprenant un corps de bloc de coupe cylindrique ayant un certain nombre de cavités divergeant vers l'intérieur dans sa surface cylindrique externe et une lame de coupe retenue dans chacune des cavités par un élément formant coin et une ou plusieurs vis de serrage vissées dans l'élément formant coin, caractérisé en ce que chaque élément formant coin (7) remplit sensiblement sa cavité (2) et renferme sa vis ou ses vis de serrage (8) à l'intérieur, de sorte qu'une tête (9) de la vis ou de chaque vis se trouve près du plan de la face frontale de l'élément formant coin, et en ce quele corps du bloc de coupe comprend un passage (12) selon une corde du cercle pour chaque vis de serrage, aligné sur l'axe de la vis de serrage respective afin de pouvoir introduire une clavette pour serrer ou desserrer la vis.

2. Bloc de coupe rotatif selon la revendication 1, dans lequel la tête (9) de la vis ou de chaque vis (8) est formée (13) de manière à s'étendre partiellement dans le passage (12) selon la corde.

FIG.1

FIG.2

FIG.3

FIG.4